# EUROPÄISCHE PATENTSCHRIFT

(11) **EP 2 759 509 B1**
(45) Veröffentlichungstag und Bekanntmachung des Hinweises auf die Patenterteilung: **22.07.2015**
(21) Anmeldenummer: 14151138.6
(22) Anmeldetag: 14.01.2014
(51) Int. Cl.: B66C 19/00

(54) **Portalhubstapler**
Portal forklift truck
Chariot cavalier

(30) Priorität: 23.01.2013 DE 202013000660 U
(43) Veröffentlichungstag der Anmeldung: 30.07.2014
(73) Patentinhaber: Noell Mobile Systems GmbH, 97080 Würzburg (DE)
(72) Erfinder: Bauer, Reinhard, 97280 Remlingen (DE)
(74) Vertreter: Rau, Schneck & Hübner Patentanwälte Rechtsanwälte PartGmbB

(56) Entgegenhaltungen:
- EP-A2- 1 925 492
- DE-A1- 10 346 796
- DE-A1-102009 044 779
- JP-A- 2008 247 581
- US-A1- 2004 231 330

## Beschreibung

Die Erfindung betrifft einen Portalhubstapler.

Aus der DE 103 46 796 A1 ist ein dieselelektrischer Portalhubstapler mit vermindertem Kraftstoffverbrauch bekannt.

Es ist eine Aufgabe der vorliegenden Erfindung, einen Portalhubstapler derart weiterzuentwickeln, dass dessen Kraftstoffverbrauch weiter reduziert ist.

Diese Aufgabe wird durch einen Portalhubstapler mit den Merkmalen des Anspruchs 1 gelöst.

Erfindungsgemäß wurde erkannt, dass ein Portalhubstapler neben einem ersten Aggregat zum Erzeugen elektrischer Primärenergie ein zweites Aggregat zum Erzeugen elektrischer Sekundärenergie aufweist. Das zweite Aggregat ist derart ausgeführt, dass das Erzeugen der elektrischen Sekundärenergie durch Nachverstromen von Abwärme erfolgt, die bei dem Erzeugen der elektrischen Primärenergie des ersten Aggregats anfällt. Der Erfindung liegt also die Erkenntnis zugrunde, dass die Abwärme des ersten Aggregats, das insbesondere einen Verbrennungsmotor, insbesondere einen Dieselmotor, oder eine Turbine jeweils mit nachgeschaltetem Generator aufweisen kann, aktiv zu nutzen. Die Abwärme des ersten Aggregats geht nicht nutzlos verloren. Die Abwärme wird genutzt, um Sekundärenergie zu gewinnen. Der Gesamtwirkungsgrad des Antriebs für den Portalhubstapler ist erhöht. Der Kraftstoffverbrauch und damit der Abgasausstoß des Portalhubstaplers sind reduziert. Ein derartiger Portalhubstapler kann besonders umweltfreundlich betrieben werden.

Ein Portalhubstapler nach Anspruch 2 ermöglicht eine besonders vorteilhafte Nachverstromung der Abwärme des ersten Aggregats. Eine Organic Rankine Cycle(ORC-)Maschine als zweites Aggregat kann insbesondere klein und kompakt ausgeführt und daher besonders vorteilhaft auf dem Portalhubstapler untergebracht sein. Die ORC-Maschine wird auch als ORC-Aggregat bezeichnet.

Ein Portalhubstapler nach Anspruch 3 gewährleistet eine unkomplizierte Integration des zweiten Aggregats an dem Portalhubstapler.

Ein Portalhubstapler nach Anspruch 4 ermöglicht eine weitere Reduktion der Baugröße des ORC-Aggregats. Insbesondere ist es möglich, auf die Verwendung einer Schmiermittelpumpe zu verzichten, da ein Schmierstoffabscheider, insbesondere ein Ölabscheider, Schmiermittel, insbesondere in Form von Öltröpfchen, in einem Arbeitsfluid, unter Hochdruck abscheidet und es Schmierstellen einer Entspannungsmaschine zuführt.

Ein Portalhubstapler nach Anspruch 5 ermöglicht einen vorteilhaften Kreislauf umfassend einen Wärmeübertrager, eine Entspannungsmaschine mit angekoppeltem Generator und einem Kondensator zur Verflüssigung des Arbeitsfluids. Eine Speisepumpe pumpt das Fluid vom Kondensator zurück in den Wärmeübertrager.

Ein Portalhubstapler nach Anspruch 6 weist durch die Verwendung von flüssigem Erdgas (LNG) als Kühlmittel in dem Kondensator einen verbesserten Wirkungsgrad bei der Nachverstromung auf. Der Wirkungsgrad wird um mindestens 50 %, insbesondere um mindestens 60 % und insbesondere um 62,5 % erhöht. Hierdurch werden Kraftstoff eingespart und die CO2-Emissionen reduziert.

Ein Portalhubstapler nach Anspruch 7 weist durch die Verwendung von Helium oder Stickstoff als Arbeitsmedium in dem thermodynamischen Kreislaufsystem einen verbesserten Wirkungsgrad bei der Nachverstromung auf. Der Wirkungsgrad wird um mindestens 50 %, insbesondere um mindestens 60 % und insbesondere um 62,5 % erhöht. Hierdurch wird Kraftstoff eingespart und die CO2-Emissionen reduziert.

Ein Portalhubstapler nach Anspruch 8 ermöglicht eine besonders effiziente Nutzung des flüssigen Erdgases (LNG), da LNG als Kühlmittel zum Verflüssigen eines Arbeitsfluids in einem Kondensator verdampft und das verdampfte LNG, insbesondere über einen Gasmischer, in dem eine Vermischung mit Verbrennungsluft erfolgt, als Gas-Luft-Gemisch dem Gasmotor als Kraftstoff zugeführt wird. So sind eine besonders kompakte und platzsparende Bauweise sowie ein effizienter Betrieb möglich. Als Gasmotor im Sinne dieser Anmeldung ist ein Verbrennungsmotor zu verstehen, der eine nach dem Otto-Prozess arbeitende Verbrennungskraftmaschine ist, wobei gasförmiger Kraftstoff wie beispielsweise Erdgas, Flüssiggas, Holzgas, Biogas, Deponiegas, Grubengas, Gichtgas oder Wasserstoff verwendet wird. Als Gasmotor wird aber auch eine Gasturbine verstanden, die insbesondere einen Verdichter, eine Brennkammer und eine Turbine oder einen Expander aufweist. Eine derartige Gasturbine beruht auf dem Wirkungsprinzip des Kreisprozesses. In mindestens einer Verdichterstufe wird Luft mit einem Gas zu einem Verbrennungsgemisch und in der Brennkammer gezündet und verbrannt. Das durch die Verbrennung entstandene Heißgas wird in einem Turbinenteil entspannt, sodass thermische Energie in mechanische Energie umgewandelt werden kann. Wesentlich ist also, dass Energie aus einem Verbrennungsprozess, zu dem zumindest anteilig Gas eingesetzt wird, in mechanische Energie umgewandelt wird. Die mechansche Energie kann anschließend einem Generator zugeführt werden, um elektrische Primär-Energie zu erzeugen.

Ein Portalhubstapler nach Anspruch 9 ermöglicht eine alternative Ausführung des zweiten Aggregats in Form eines Electrical Turbo Compound(ETC-)Systems. Bei einem derartigen System ist ein hochdrehender Stromgenerators an eine Abgasturbine oder an einen Abgasturbolader getriebelos angekoppelt.

Ein Portalhubstapler nach Anspruch 10 weist ein ETC-System eine systemeigene Abgasturbine auf, die in einem Abgasstrom hinter einem AbgasTurbolader angeordnet ist. Alternativ ist es auch möglich, dass das ETC-System keine systemeigene Abgasturbine aufweist. In diesem Fall ist ein Rotor des Stromgenerators des ETC-Systems mechanisch direkt mit einer Welle des Abgasturboladers gekoppelt. Das bedeutet, das ETC-System, insbesondere der Generator des ETC-Systems, nutzt die Abgasturbine des Abgasturboladers.

Ein Portalhubstapler nach Anspruch 11 ermöglicht das Kompensieren von Energiespitzen, insbesondere während der Energieerzeugung und während der Energienutzung. Dadurch wird das erste Aggregat gleichmäßig ausgelastet. Die dadurch erzeugte Abwärme fällt gleichmäßiger an. Dadurch kann das zweite Aggregat in einem Betriebspunkt mit gutem Wirkungsgrad betrieben werden. Ein derartiger Portalhubstapler kann effektiv betrieben werden.

Ein Portalhubstapler nach Anspruch 12 ermöglicht eine effiziente und zielgerichtete Steuerung und Überwachung eines Energiezwischenspeichers. Dadurch ist ein effektives Energiemanagement an dem Portalhubstapler gewährleistet. Insbesondere kann ausgeschlossen werden, dass ein Energiezwischenspeicher unbeabsichtigt überladen oder vollständig entladen wird.

Ein Portalhubstapler nach Anspruch 13 ermöglicht eine schnelle und direkte Kommunikationsverbindung zwischen dem zweiten Aggregat und einer elektronischen Fahrzeugsteuerung.

Ein Portalhubstapler nach Anspruch 14 ermöglicht eine vorteilhafte Zentralversorgung mehrerer an einem Feldbus angeschlossener Antriebe, insbesondere mindestens eines Fahrantriebs, mindestens eines Hubantriebs und mindestens eines Hilfsantriebs beispielsweise für eine Kühlerpumpe, einen Lüfter, ein Klimagerät oder eine Heizung. Insbesondere ermöglicht ein derartiger Portalhubstapler eine zentrale Steuerung aller Energieverbraucher und Energieerzeuger mittels einer elektronischen Fahrzeugsteuerung.

Ein Portalhubstapler nach Anspruch 15 ermöglicht eine intelligente Steuerung des Energiemanagements des Portalhubstaplers.

Ausführungsbeispiele der Erfindung werden nachfolgend anhand der Zeichnung näher erläutert. In dieser zeigen:
- Fig. 1: eine schematische Darstellung eines erfindungsgemäßen Portalhubstaplers,
- Fig. 2: ein schematisches Schaltbild eines an dem Portalhubstapler gemäß Fig. 1 verwendeten zweiten Aggregats in Form eines ORC-Aggregats,
- Fig. 3: ein Blockschaltbild eines Powermanagement-Systems des erfindungsgemäßen Portalhubstaplers,
- Fig. 4: eine Fig. 2 entsprechende Schaltskizze des zweiten Aggregats in einer weiteren Ausführungsform als ETC-System und
- Fig. 5: eine Fig. 2 entsprechende Schaltskizze in einer weiteren Ausführungsform mit LNG-Betrieb.

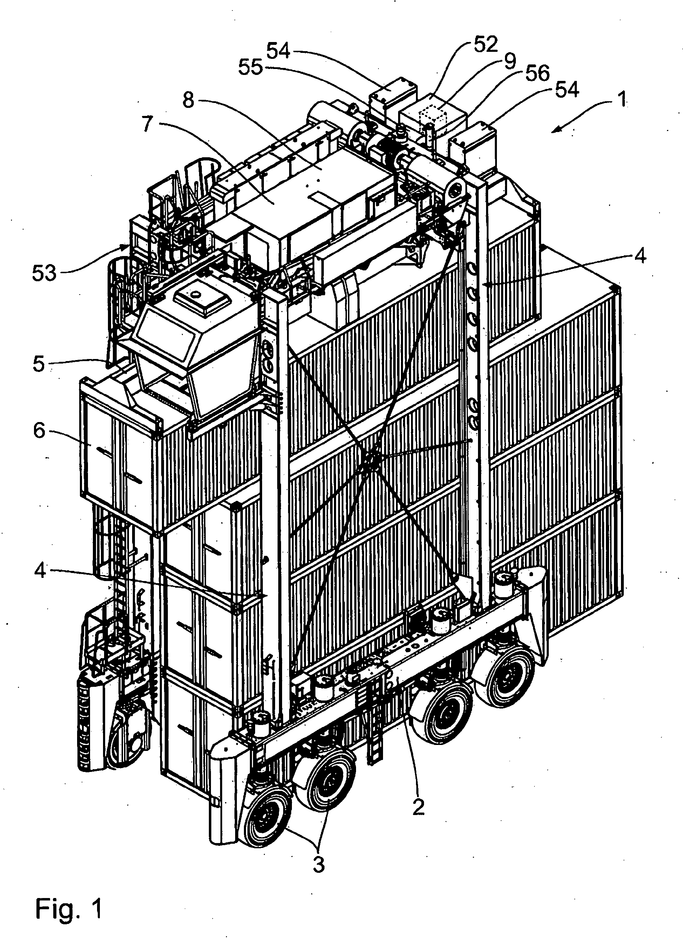

Ein in Fig. 1 dargestellter Portalhubstapler 1 umfasst zwei entlang einer Fahrrichtung orientierte Fahrwerksträger 2, an welchen jeweils vier Einzelräder 3 angeordnet sind. Die Fahrwerksträger 2 sind parallel zueinander und in einer gemeinsamen Horizontalebene angeordnet. An einer den Rädern 3 abgewandten Oberseite sind die beiden Fahrwerksträger 2 durch zwei im Wesentlichen U-förmige Portalrahmen 4 miteinander verbunden. Die Portalrahmen 4 sind entlang der Fahrtrichtung an einem vorderen Ende der Fahrwerksträger 2 und an einem hinteren Ende der Fahrwerksträger 2 angeordnet.

Der Portalhubstapler 1 weist einen an dem Portalrahmen 4 geführten, vertikal verlagerbaren Spreader 5 auf. Der Spreader 5 dient zum Handhaben eines Frachtcontainers 6. Der Portalhubstapler 1 und insbesondere die Portalrahmen 4 sind derart ausgelegt, dass der Portalhubstapler 1 mit einem gehobenen Container 6 bis zu drei am Boden befindliche, übereinander gestapelte Container 6 überfahren kann.

Zur Erzeugung von elektrischer Primärenergie, die für ein Betreiben des Portalhubstaplers 1 erforderlich ist, ist ein erstes Aggregat vorgesehen. Das erste Aggregat ist gemäß dem gezeigten Ausführungsbeispiel oberhalb einer von den beiden Portalrahmen 4 definierten Oberseite angeordnet. Das erste Aggregat umfasst einen Verbrennungsmotor 7 in Form eines Dieselmotors 7 und einen damit verbundenen Generator 8 zum Umwandeln der von dem Dieselmotor erzeugten Energie in elektrische Energie. Weiterhin ist ein rein schematisch dargestelltes zweites Aggregat in Form eines Organic Rankine Cycle (ORC-) Aggregats 9 vorgesehen. Das ORC-Aggregat 9 ist mit dem Dieselmotor 7 verbunden. Das ORC-Aggregat 9 dient zum Nachverstromen von Abwärme, die von dem ersten Aggregat, insbesondere von dem Dieselmotor 7 und/oder dem Generator 8 zur Erzeugung der elektrischen Primärenergie anfällt.

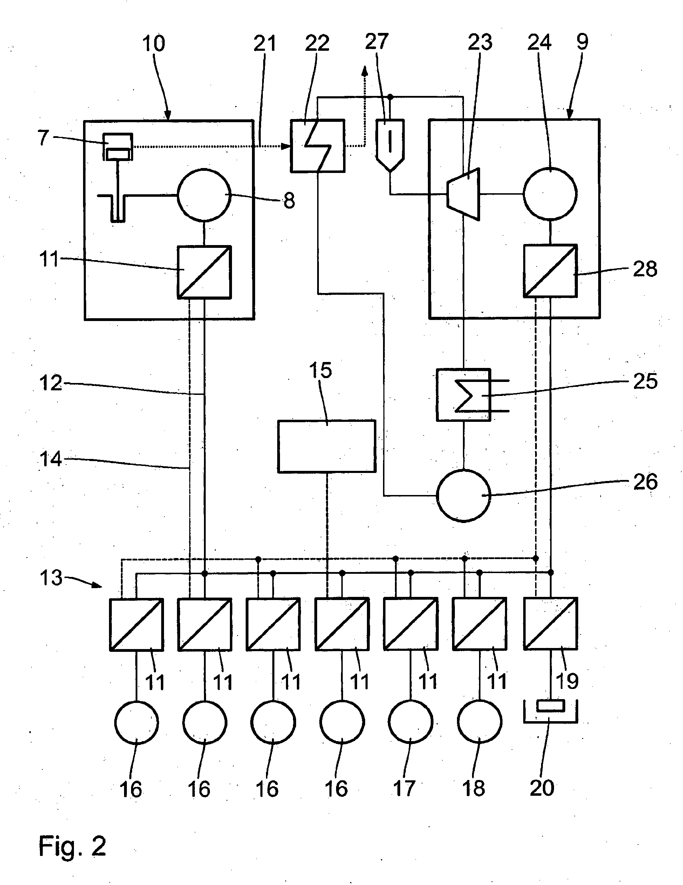

Im Folgenden werden anhand von Fig. 2 Aufbau und Funktion des ORC-Aggregats 9 näher erläutert. Das als Ganzes mit 10 bezeichnete erste Aggregat umfasst den Verbrennungsmotor 7 sowie einen daran angeschlossenen Drehstromgenerator 8. Der Drehstromgenerator 8 erzeugt Wechselstrom, der über einen im Gleichrichtermodus betriebenen Wechselrichter 11 als Gleichstrom über eine Sammelschiene 12 für einen Gleichspannungszwischenkreis 13 zur Verfügung gestellt wird. Die Sammelschiene 12 ist als durchgezogene Linie dargestellt. Gleichzeitig ist der Wechselrichter 11 über einen in gestrichelter Linie dargestellten Feldbus 14, der insbesondere als CAN-Bus ausgeführt ist, mit einer elektronischen Steuereinheit 15 des Portalhubstaplers 1 verbunden. Die elektronische Steuereinheit 15 ermöglicht ein Leistungs- und Energiespeicher-Management. Die elektronische Steuereinheit 15 ist beispielsweise als speicherprogrammierbare Steuerung (SPS) oder als separater Rechner ausgeführt. Über den CAN-Bus 14 ist die elektronische Steuereinheit 15 mit weiteren Wechselrichtern 11 verbunden, die jeweils Fahrwerksantriebe 16, einen Hubwerksantrieb 17 und weitere Hilfsantriebe 18 mit elektrischer Energie aus dem Gleichspannungszwischenkreis 13 versorgen. Die Hilfsantriebe 18 sind beispielsweise Hilfsmotoren für eine Kühlerpumpe, einen Lüfter, Klimageräte und/oder Heizungsgeräte an dem Portalhubstapler 1. Die Wechselrichter 11 sind entsprechend über die Sammelschiene 12 des Gleichspannungszwischenkreises 13 miteinander, mit dem Wechselrichter 11 des ersten Aggregats 10, und mit einem Einspeise-Wechselrichter 28 des zweiten Aggregats 9 verbunden.

Ebenfalls über die Sammelschiene 12 des Gleichspannungszwischenkreises 13 mit dem Wechselrichter 11 des ersten Aggregats 10 ist ein Lade-/Entladeregler 19 verbunden, der zum Steuern und Überwachen eines Energiezwischenspeichers 20 dient. Der Energiezwischenspeicher 20 kann beispielsweise als Doppelschicht-Kondensator, als Batterie oder als Schwungradspeicher ausgeführt sein. Der Energiezwischenspeicher 20 ermöglicht, dass Energiespitzen durch Pufferung gedämpft werden können. Dadurch ist es möglich, dass das erste Aggregat 10 eine im Wesentlichen ausgeglichene und insbesondere gleichmäßige, kontinuierliche elektrische Leistung bei im Wesentlichen konstanter Drehzahl in den Gleichspannungszwischenkreis 13 einspeisen kann. Die von dem ersten Aggregat 10 erzeugte Abwärme wird gleichmäßig an das zweite Aggregat 9 abgegeben. Dadurch sind Schwankungen bei der Energiezufuhr für den Betrieb des zweiten Aggregats 9 reduziert. Ein optimaler Betrieb für das zweite Aggregat 9 ist möglich.

Durch den Betrieb des ersten Aggregats 10, insbesondere durch den Betrieb des Dieselmotors 7, wird Abwärme produziert, die durch den Pfeil 21 in Fig. 2 symbolhaft dargestellt ist. Erfindungsgemäß wird der Abwärmestrom des Dieselmotors 7 in Form eines Abgas- oder Kühlmittelstroms einem Wärmetauscher, der insbesondere als Verdampfer 22 ausgeführt ist, zugeführt. Der Wärmetauscher 22 ist Teil eines thermodynamischen Kreislaufssystems, das weiterhin eine thermodynamische Maschine in Form einer Entspannungsmaschine 23 mit daran angekoppeltem elektrischen Stromgenerator 24, einen mit der Entspannungsmaschine 23 verbundenen Kondensator 25 zum Verflüssigen eines Arbeitsfluids sowie eine damit verbundene Flüssigkeitspumpe 26 zum Zurückpumpen des verflüssigten Arbeitsfluids aus dem Kondensator 25 in den Wärmetauscher 22 aufweist. In dem Wärmetauscher 22 wird das flüssige Fluid in Folge des zugeleiteten Abwärmestroms 21 des ersten Aggregats 10 verdampft und treibt damit die Entspannungsmaschine 23 an, um somit elektrischen Strom zu erzeugen. Die Entspannungsmaschine 23 treibt den Generator 24 an. Die Entspannungsmaschine 23 kann beispielsweise eine Expansionsmaschine, insbesondere ein Dampfschraubenmotor, ein Flügelzellenmotor oder ein Kolbendampfmotor sein. Es ist auch möglich, dass die Entspannungsmaschine 23 eine Turbine ist. Weiterhin ist ein Ölabscheider 27 vorgesehen, der entlang des hydrodynamischen Kreislaufsystems hinter dem Wärmetauscher 22 angeordnet ist. Sofern Schmiermittel im Arbeitsfluid enthalten ist, liegt dieses hinter dem Wärmetauscher 22 in Form von feinen Öltröpfchen in dem gasförmigen Arbeitsmedium vor. Das Schmiermittel kann in Form der Öltröpfchen an dem Ölabscheider 27 unter Hochdruckbedingungen teilweise abgeschieden werden. Das abgeschiedene Schmiermittel wird unter Hochdruckbedingungen Schmierstellen der Entspannungsmaschine 23 zugeführt. Dadurch ist es möglich, auf eine Schmiermittelpumpe an der Entspannungsmaschine 23 zu verzichten. Das zweite Aggregat 9 kann kompakter ausgeführt werden. Dadurch ist insgesamt ein kleineres, kompakteres und insbesondere gewichtsreduzierteres ORC-Aggregat 9 ausführbar.

Der Generator 24 des ORC-Aggregats 9 ist über einen Einspeise-Wechselrichter 28 an die Sammelschiene 12 des Gleichspannungszwischenkreises 13 angeschlossen.

Es ist besonders vorteilhaft, wenn das kompakte ORC- Aggregat 9 in einem, insbesondere quaderförmigen, Schutzgehäuse 52 untergebracht ist. Das Schutzgehäuse 52 bietet ausreichend Schutz vor Witterung, insbesondere vor Feuchte- und Temperatureinfluss, für das ORC-Aggregat 9. Das Schutzgehäuse 52 kann beispielsweise an einer Maschinenbühne 53 hinten, insbesondere zwischen Bremswiderständen 54 bzw. einem Energiespeicher, neben einem Schalldämpfer 55 oder einem Katalysator eines Auspuffs 56 angebracht sein. Es ist denkbar, dass nur ein Bremswiderstand 54 vorgesehen ist. In diesem Fall ist ein Energiespeicher anstelle des zweiten Bremswiderstandes 54 vorgesehen. Insbesondere weist der Energiespeicher ähnliche und insbesondere identische Abmaße wie der andere Bremswiderstand auf. Das Schutzgehäuse 52 kann vorteilhaft zwischen dem Bremswiderstand 54 und dem Energiespeicher angeordnet sein. Bei einer Anordnung des Schutzgehäuses 52 mit dem darin integrierten ORC-Aggregat 9 ist der vorhandene Platz auf der Maschinenbühne 53 besonders vorteilhaft ausgenutzt.

Der Generator 24 des ORC-Aggregats kann als Synchron- oder Asynchrongenerator ausgeführt sein. Der von dem Generator 24 erzeugte Wechsel- oder Drehstrom wird von dem generatorisch betriebenen, regelbaren Einspeise-Wechselrichter 28 gleichgerichtet und direkt über die Sammelschiene 12 in den Gleichspannungszwischenkreis 13 für die Hauptantriebe 16 und 17 eingespeist. Alternativ kann auch der Generator 24 beispielsweise ein Bordnetz mit 3 AC, 400 V für die Hilfsantriebe 18 speisen, wenn ein dafür entsprechender Frequenzumrichter vorgesehen ist. Der regelbare Einspeise-Wechselrichter 28 erlaubt eine Regelung der Ausgangsspannung und des Ausgangsstroms, also des Einspeisestroms, für den Gleichspannungszwischenkreis, des ORC-Aggregats 9 auf geforderte Sollwerte. Die geforderten Sollwerte können beispielsweise von der übergeordneten elektrischen Steuereinheit 15 mittels des CAN-Bus 14 vorgegeben werden.

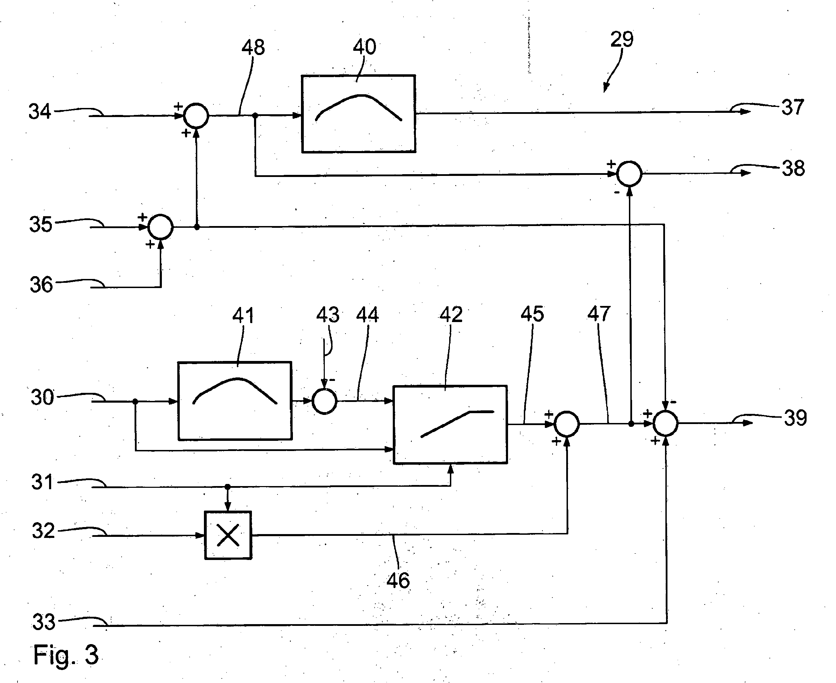

Im Folgenden wird anhand von Fig. 3 ein Regelungssystem mittels einer Powermanagement-Software zur Steuerung und Regelung des erfindungsgemäßen Portalhubstaplers anhand von Fig. 3 näher erläutert. Dem als Ganzes mit 29 bezeichneten Regelungssystem, das insbesondere in der Steuereinheit 15 integriert ist, werden Eingangssignale 30, 31, 32, 33 über den CAN-Bus 14 zur Verfügung gestellt. Diese Eingangssignale 30, 31, 32, 33 sind Istwerte von Regelelektroniken der einzelnen Wechselrichter 11, 19 und 28 sowie des ersten Aggregats 10 und des zweiten Aggregats 9. Das Eingangssignal 30 ist der Drehzahlistwert des Dieselmotors 7 bzw. des Generators 8 des ersten Aggregats 10. Das Eingangssignal 31 ist der Istwert der Zwischenkreisspannung. Das Signal 32 ist der Istwert des Einspeisestroms des zweiten Aggregats 9. Das Signal 33 charakterisiert die verfügbare Speicherleistung.

Weiterhin werden Eingangssignale 34, 35 und 36 zur Verfügung gestellt. Diese Eingangssignale werden ebenfalls über den CAN-Bus 14 zur Verfügung gestellt und stellen Sollwerte dar, die bei einem manuellen Betrieb des Portalhubstaplers 1 durch einen Fahrer über ein Fahrpedal und einen Hubwerks-Meisterschalter oder bei Automatikbetrieb aus einer Fahrzeugleitsteuerung, einem sogenannten Autopiloten, erzeugt werden. Das Eingangssignal 34 charakterisiert den Sollwert der Fahrwerksleistung. Das Signal 35 ist der Sollwert der Hubwerksleistung. Das Signal 36 ist der Sollwert der Hilfsantriebe.

Die Eingangssignale 30 bis 36 werden in dem Regelungssystem 29 verarbeitet und daraus Ausgangssignale 37, 38, 39 erzeugt, die über den CAN-Bus 14 als Sollwerte bzw. Sollwertbegrenzungswerte an die Regelelektroniken, insbesondere des Wechselrichters 11 des ersten Aggregats 10 und des zweiten Aggregats 9 übermittelt werden. Das Ausgangssignal 37 stellt die Solldrehzahl für den Dieselmotor 7 und/oder für den Generator 8 des ersten Aggregats 10 dar. Das Ausgangssignal 38 charakterisiert das Soll-Signal für eine geforderte Speicherleistung. Das Ausgangssignal 39 ist ein Sollwert für eine Leistungsbegrenzung des Fahrwerks.

Vorzugsweise werden die Eingangssignale 30 bis 36 und die Ausgangssignale 37 bis 39 über den CAN-Bus 14 direkt als Leistungswerte, oder als Spannungen und Ströme, übertragen. Es ist alternativ möglich, die Signale als Drehzahlen und Drehmomente zu übertragen und diese in der Steuereinheit 15 in entsprechende Leistungen umzurechnen. Dazu weist die Steuereinheit 15 eine integrierte Recheneinheit auf.

Um aus den Eingangssignalen 30 bis 36 die Ausgangssignale 37 bis 39 zu erzeugen, sind in dem Regelungssystem 29 und insbesondere in der implementierten Powermanagement-Software charakteristische, insbesondere vorab experimentell ermittelte Leistungskurven 40, 41 des ersten Aggregats 10 und des Dieselmotors 7 hinterlegt. Weiterhin ist eine Leistungskurve 42 des Generators 8 hinterlegt. Die Leistungskurven 40, 41, 42 stellen den Zusammenhang zwischen Drehzahl und Leistung des ersten Aggregats 10 dar. Die Leistungskurven 40, 41 können beispielsweise verbrauchsoptimale Kurven des Dieselmotors 7 sein. Sofern diese verbrauchsoptimalen Kurven a priori nicht bekannt sind und insbesondere lediglich die von einem Hersteller des Dieselmotors 7 veröffentlichten Grenzleistungskurven zur Verfügung stehen, kann diese Grenzleistungskurve als solche in die Powermanagement-Software implementiert werden. Die Powermanagement-Software ermöglicht eine Anpassung der Grenzleistungskurve mit einem gewünschten Auslastungsfaktor des Dieselmotors 7, um daraus eine angepasste Kurve zu berechnen. Bei Dieselmotoren in der Praxis hat sich beispielsweise gezeigt, dass ein Auslastungsfaktor von etwa 0,8 der jeweiligen Grenzleistung im Wesentlichen zu einer verbrauchsoptimalen Kurve führt.

Das Eingangssignal 30 wird einerseits direkt mit der Leistungskurve des Dieselmotors 41, die eine Umkehrfunktion zu der Leistungskurve 40 darstellt, verglichen. Das sich daraus ergebende Signal wird mit der Leistung 43 der mechanischen Nebenantriebe wie beispielsweise Hydraulikpumpen als Stellsignal beaufschlagt. Das daraus errechnete Signal stellt die verfügbare mechanische Leistung 44 an der Generatorwelle dar. Die verfügbare mechanische Leistung 44 dient als weiteres Eingangssignal neben dem Drehzahlistwert 30 für die Leistungskurve 42 des Generators 8 des ersten Aggregats 10. Daraus wird die verfügbare elektrische Leistung 45 des ersten Aggregats 10 ermittelt. Zusätzlich in dem Vergleich mit der Leistungskurve 42 des Generators 8 fließt auch die Zwischenkreisspannung 31 ein. Die Zwischenkreisspannung 31 wird zudem mit dem Einspeisestrom 32 des zweiten Aggregats 9 multipliziert und daraus die verfügbare elektrische Leistung 46 des zweiten Aggregats 9 berechnet. Die verfügbaren elektrischen Leistungen 45, 46 der Aggregate 9, 10 werden addiert und daraus die verfügbare elektrische Gesamtleistung 47 des Gleichstromzwischenkreises 13 berechnet. Zu der verfügbaren elektrischen Gesamtleistung 47 wird die verfügbare Speicherleistung 33 addiert und gleichzeitig die Summe der Hubwerksleistung 35 und der Leistung der Hilfsantriebe 36 subtrahiert. Daraus ergibt sich der Sollwert 39 für die Leistungsbegrenzung des Fahrwerks.

Aus den Sollwerten von Hubwerksleistung 35 und der Hilfsantriebe 36 wird mit dem Sollwert 34 der Fahrwerksleistung die geforderte Summenleistung 48 addiert und der Leistungskurve 40 des Dieselmotors 7 des ersten Aggregats 10 zugeführt. Gleichzeitig wird der Summenwert 48, der der geforderten elektrischen Summenleistung entspricht, mit der verfügbaren elektrischen Gesamtleistung 47 verglichen und daraus die geforderte Speicherleistung 38 als Ausgangssollsignal berechnet. Dieses Ausgangssollsignal 38 dient insbesondere zum Boosten der Fahrwerks- und Hubwerksantriebe, wenn diese kurzzeitig Spitzenleistungen zum Beschleunigen oder Heben einer Last fordern. Das Ausgangssollsignal 38 kann auch zum Rekuperieren von Bremsenergien genutzt werden, also dem Rückspeisen von gewonnener Energie, wenn die Fahrwerksmotoren elektrisch bremsen oder das Hubwerk eine Last absenkt. Die zum Boosten oder Rekuperieren erforderliche Speicherleistung wird als Ausgangsollsignal 38 über den CAN-Bus 14 dem Lade-/Entladeregler 19 des Energiezwischenspeichers 20 zugeführt. Der Lade-/Entladeregler 19 regelt einen Lade- oder Entladestrom des Energiespeichers 20 auf einen Wert, der der geforderten Speicherleistung gemäß Ausgangssollsignal 38 entspricht.

Aus dem Vergleich des Summenleistungssignals 48 mit der Leistungskurve 40 des Dieselmotors 7 wird direkt das Ausgangssignal 37 für die Solldrehzahl des Dieselmotors 7 bzw. des Generators 8 des ersten Aggregats 10 berechnet.

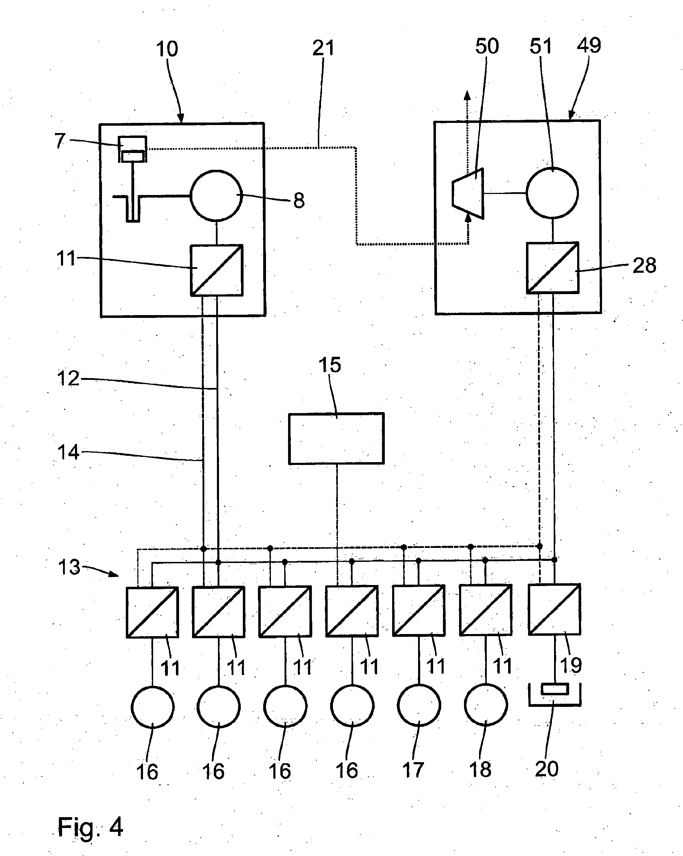

Fig. 4 zeigt eine weitere Ausführung einer Anbindung eines zweiten Aggregats 49 in dem Portalhubstapler 1. Komponenten, die denjenigen entsprechen, die vorstehend unter Bezugnahme auf die Fig. 1 bis 3 erläutert wurden, tragen die gleichen Bezugsziffern und werden nicht nochmals im Einzelnen diskutiert.

Der wesentliche Unterschied der Ausführungsform gemäß Fig. 4 ist, dass das zweite Aggregat als Electrical Turbo Compound (ETC-)-System 49 ausgeführt ist. Das ETC-System 49 entspricht im Wesentlichen einem elektrischen Stromgenerator mit einer sehr hohen Drehzahl. Im Vergleich mit dem ORC-Aggregat 9 der Ausführungsform gemäß Fig. 2 ist bei dem ETC-System gemäß Fig. 4 der thermodynamische Kreislauf mit dem Wärmetauscher 22, dem Kondensator 25 und der Speisepumpe 26 nicht erforderlich. Eine Abgasturbine 50 ist direkt mit dem Dieselmotor 7, der insbesondere ein Hubkolbenmotor ist, verbunden. Insbesondere kann die Abgasturbine 50 direkt hinter einem nicht dargestellten Abgasturbolader des Hubkolbenmotors eingebaut sein. Alternativ ist es auch möglich, auf die Abgasturbine 50 zu verzichten, und einen Generator 51 des zweiten Aggregats 49 direkt von der Welle des Abgasturboladers antreiben zu lassen. Dadurch, dass der Generator 51 bei sehr hohen Antriebsdrehzahlen von beispielsweise 2000 U/min bis 100.000 U/min betrieben werden kann, ist ein Zwischengetriebe an der Welle der Abgasturbine 50 nicht erforderlich. Dadurch kann eine besonders kleine, leichte und kompakte Bauform des ETC-Systems 49 realisiert werden.

Derart hohe Antriebsdrehzahlen können beispielsweise durch einen speziell konstruierten Rotor erreicht werden. Beispielsweise kann über den Rotor, der mit Permanentmagneten bestückt ist, eine Hülse aus Kohlefaserwerkstoff gespannt werden. Dadurch ist sichergestellt, dass die Hülse den Rotor auch bei sehr hohen Fliehkräften in Folge der hohen Antriebsdrehzahlen sicher zusammenhält. Die hohen Stromfrequenzen eines derart hochdrehenden Generators 51 bewirken hohe Spannungsabfälle an dessen Reaktanzen. Es ist möglich, elektrische Kondensatoren in den Ausgangsleitungen des Generators zur Verfügung zu stellen, um diese Spannungsabfälle, zumindest größtenteils, zu kompensieren.

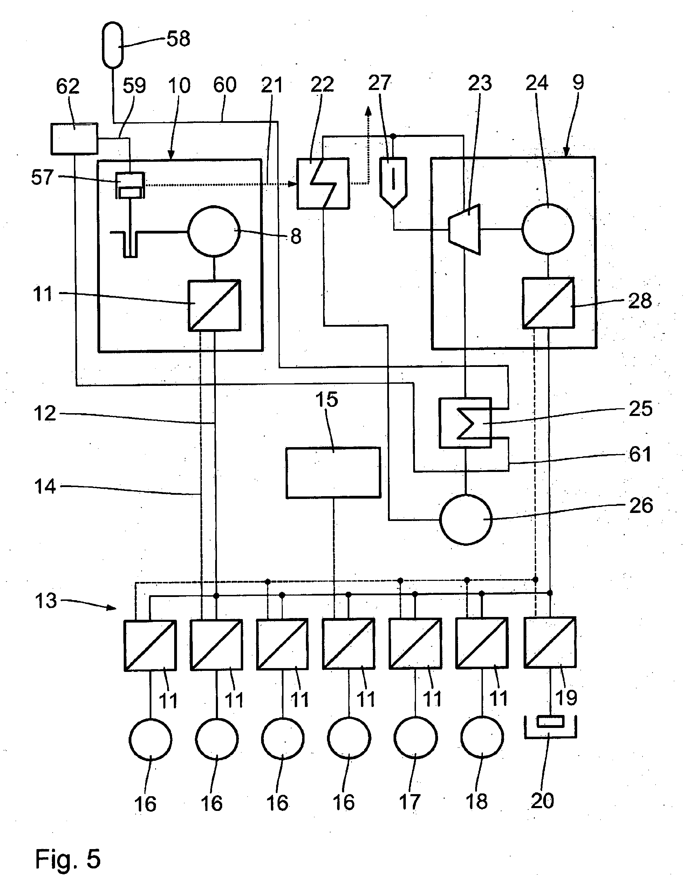

Fig. 5 zeigt eine besonders vorteilhafte Ausführungsform des Portalhubstaplers 1 gemäß Fig. 2. Komponenten, die denjenigen entsprechen, die vorstehend unter Bezugnahme auf die Fig. 1 bis 2 erläutert wurden, tragen die gleichen Bezugsziffern und werden nicht noch mal im Einzelnen diskutiert.

In dieser vorteilhaften Ausführungsform weist das erste Aggregat 10 anstelle eines Dieselmotors einen Gasmotor 57 auf, der mit tiefkaltem Flüssiggas, insbesondere flüssigem Erdgas (LNG), betrieben wird. Des Weiteren ist ein LNG-Tank 58 vorgesehen, der über eine Zuführleitung 60 mit dem Kondensator 25 verbunden ist. Der Kondensator 25 ist über eine Gasleitung 61 mit einem Gasmischer 62 verbunden. Der Gasmischer 62 ist über eine weitere Gasleitung 59 mit dem Gasmotor 57 verbunden.

Vorteilhaft an dieser Ausführungsform ist, dass das Flüssigerdgas (LNG) zunächst als Kühlmittel zum Verflüssigen des Arbeitsfluids in dem Kondensator 25 dient. Durch die Wärmeaufnahme des LNG im Kondensator 25 wird das LNG verdampft. Der Kondensator 25 dient als Verdampfer. Von dem Kondensator 25 wird das verdampfte LNG in dem Gasmischer 62 gefördert. Der Gasmischer 62 befindet sich insbesondere im Ansaugtrakt des Gasmotors 57. In dem Gasmischer 62 wird das verdampfte LNG mit Luft zu einem Gas-Luft-Gemisch vermischt. Das Gas-Luft-Gemisch wird über die Gasleitung 59 dem Gasmotor 57 zur Verbrennung zugeführt. Das verdampfte LNG dient also gleichzeitig als Kraftstoff für den Gasmotor 57. Die Verdampfung des tiefkalten LNG im Kondensator 25 bewirkt somit gleichzeitig eine Abkühlung und Verflüssigung des Arbeitsmediums in der ORC-Anlage 9. Der Kondensator 25 ist ein Wärmetauscher.

Es ist besonders vorteilhaft, wenn das Arbeitsmedium im Kondensator beispielsweise aus Helium und/oder Stickstoff besteht und somit das zweite Aggregat, also die ORC-Anlage 9 in einem geschlossenen Gasturbinenprozess betrieben werden kann, bei dem das Arbeitsmedium als Gas nicht verflüssigt wird. In diesem Fall ist anstelle des Kondensators 25 ein zweiter Wärmetauscher vorgesehen, der das Arbeitsmedium kühlt und dadurch das LNG verdampft. Durch den hohen Temperaturunterschied zwischen der Abwärme 21 des Gasmotors 57 im ersten Wärmetauscher 22 einerseits und dem tiefkalten LNG im zweiten Wärmetauscher 25 andererseits wird ein deutlich höherer Wirkungsgrad von vorzugsweise 52 % gegenüber dem üblichen Wirkungsgrad von ca. 32 % erreicht. Hierdurch wird weiter Kraftstoff eingespart und die CO2-Emissionen gesenkt.

Der erfindungsgemäße Portalhubstapler ermöglicht durch die erfindungsgemäße Integration eines kleinen, kompakten zweiten Aggregats 9, 49 zur Nachverstromung der Abwärme des ersten Aggregats 10 den Vorteil einer weiteren Verringerung des Kraftstoffverbrauchs gegenüber bisher bekannten Portalhubwagen. Der erfindungsgemäße Portalhubstapler ermöglicht einen wirtschaftlicheren und umweltfreundlicheren Betrieb.

Für das zweite Aggregat 9, 49 ist es vorteilhaft, wenn das erste Aggregat 10 Leistung gleichmäßig und ohne große Schwankungen zur Verfügung stellt. Es ist insbesondere vorteilhaft, wenn das erste Aggregat 10 in einem engen Drehzahlbereich betrieben wird, das insbesondere nahe dem maximalen Drehmoment des ersten Aggregats entspricht.

Ein Dieselmotor kann ein maximales Drehmoment bei beispielsweise etwa 1500 U/min aufweisen. Das bedeutet, dass bei dieser Drehzahl auch etwa ein verbrauchsoptimaler Betriebspunkt liegt. Ein enger Drehzahlbereich nahe dem maximalen Drehmoment im Sinne dieser Anmeldung ergäbe sich für diesen Dieselmotor in einem Drehzahlintervall von 1300 U/min bis 1600 U/min. Ausgehend von einem maximalen Drehmoment ist eine Drehzahlabweichung von etwa 10 % bis 15 % tolerierbar. Die dem ersten Aggregat 10 abgenommene gleichmäßige Leistung ist dann gegeben, wenn sie von einem Leistungsmittelwert nicht um mehr als 15 % und insbesondere nicht mehr als 10 % von dem Mittelwert abweicht. Der Mittelwert der Leistung ist von einem Portalstaplertyp und insbesondere seiner zulässigen Höchstgeschwindigkeit abhängig. Je nach Portalstaplertyp kann der Mittelwert der Leistung beispielsweise zwischen 80 kW und 120 kW betragen.

Das zweite Aggregat 9, 49 kann insbesondere in einem Betriebszustand auf vorbestimmte Betriebsbedingungen abgestimmt werden, um in einem optimalen Arbeitspunkt betrieben zu werden. Eine gleichmäßige Auslastung des ersten Aggregats 10 kann trotz starker Leistungsschwankungen der Fahrwerksantriebe 16 und des Hubantriebs 17 beispielsweise dadurch gewährleistet werden, dass diese Energiespitzen in dem Energiezwischenspeicher 20 gepuffert und dadurch abgedämpft werden.

Die steuerungs- und regelungstechnische Integration des zweiten Aggregats 9, 49 in ein insbesondere bereits vorhandenes Antriebssystem des Portalhubstaplers 1 erfolgt dadurch, dass der Einspeise-Wechselrichter 28 und/oder eine Regelelektronik des zweiten Aggregats 9, 49 über den CAN-Bus 14 mit weiteren Komponenten des Antriebsstranges, insbesondere mit der elektronischen Steuereinheit 15, kommuniziert. Die Kommunikationsverbindung mittels dem CAN-Bus 14 aller Antriebskomponenten miteinander kann vorteilhaft nach der internationalen Norm SAE J1939 und nach dem DRIVE COM-Standard erfolgen. Über den CAN-Bus 14 wird die von dem Generator 24 eingespeiste Stromstärke, insbesondere die eingespeiste elektrische Leistung, und insbesondere weitere Istwerte, welche beispielsweise von nicht dargestellten Sensoren in dem Einspeise-Wechselrichter 28 erfasst werden, sowie Zustandssignale wie betriebsbereit oder Störung des Portalhubstaplers 1 an die Steuereinheit 15 übertragen.

Eine in der Steuereinheit 15 implementierte Software wertet diese Signale und Istwerte des zweiten Aggregats 9, 49 automatisch aus und beeinflusst damit Sollwerte und Steuersignale für die Hauptantriebe 16, 17 und insbesondere für das erste Aggregat 10. Die implementierte Software kann eine Powermanagement-Software zur Energieflusssteuerung in der elektronischen Steuereinheit 15 sein. Die Powermanagement-Software bilanziert rechnerisch die von den beiden Aggregaten 9, 10 momentan verfügbare elektrische Einspeiseleistung mit den von den Verbrauchern, also den Antrieben 16, 17 und 18, im momentanen Betriebszustand geforderten Leistung. Gleichzeitig begrenzt die Powermanagement-Software, insbesondere ebenfalls über den CAN-Bus 14, die Sollwerte für die Antriebe 16, 17 und 18 derart, dass die Aggregate 9, 10 nicht überlastet werden und die Gleichspannung im Gleichspannungszwischenkreis 13 nicht zusammenbricht. Dabei kann es vorteilhaft sein, wenn bei den Fahrantrieben 16 das Soll-Drehmoment und bei dem Hubantrieb 17 die Soll-Drehzahl begrenzt ist. Weiterhin kann die Powermanagement-Software auch Sollwerte für das Laden und/oder Entladen der Energiezwischenspeicher 20 derart strategisch steuern, dass Brems- und Senkenergien zwischengespeichert und rekuperiert werden. Darüber hinaus können Leistungsspitzen abgepuffert werden, so dass die beiden Aggregate 9, 10 gleichmäßig und insbesondere ohne große Leistungsschwankungen belastet werden.

## Patentansprüche

1. Portalhubstapler umfassend
a. ein erstes Aggregat (10) zum Erzeugen elektrischer Primärenergie **dadurch gekennzeichnet, dass** er auch
b. ein zweites Aggregat (9; 49) zum Erzeugen elektrischer Sekundärenergie durch Nachverstromen von bei dem Erzeugen der elektrischen Primärenergie anfallender Abwärme des ersten Aggregats (10) umfasst.

2. Portalhubstapler gemäß Anspruch 1, **dadurch gekennzeichnet, dass** das zweite Aggregat ein ORC-Aggregat (9) ist.

3. Portalhubstapler gemäß Anspruch 2, **gekennzeichnet durch** einen Wärmetauscher (22) zum Einkoppeln der Abwärme des ersten Aggregats (10) in das ORC-Aggregat (9).

4. Portalhubstapler gemäß Anspruch 3, **gekennzeichnet durch** einen zwischen dem Wärmetauscher (22) und dem ORC-Aggregat (9) angeordneten Schmierstoffabscheider (27).

5. Portalhubstapler gemäß Anspruch 3 oder 4, **gekennzeichnet durch** eine Speisepumpe (26) zum Fördern von in einem Kondensator (25) kondensiertem Arbeitsmedium von dem ORC-Aggregat (9) zu dem Wärmetauscher (22).

6. Portalhubstapler gemäß Anspruch 5, **dadurch gekennzeichnet, dass** in dem Kondensator (25) flüssiges Erdgas als Kühlmittel verwendet wird.

7. Portalhubstapler gemäß Anspruch 5 oder 6, **dadurch gekennzeichnet, dass** das zweite Aggregat (9) als geschlossenes Gasturbinenprozesssystem ausgeführt ist und insbesondere als Arbeitsfluid Helium oder Stickstoff verwendet wird.

8. Portalhubstapler gemäß Anspruch 6 oder 7, **gekennzeichnet durch** einen LNG-Tank (58), der über eine Zuführleitung (60) mit dem Kondensator (25) oder einen weiteren Wärmetauscher (25) verbunden ist, wobei insbesondere der als Gasmotor (57) ausgeführte Verbrennungsmotor über eine Gasleitung (59, 61) und insbesondere einen Gasmischer (62) mit dem Kondensator (25) bzw. der dem weiteren Wärmetauscher (25) verbunden ist.

9. Portalhubstapler gemäß Anspruch 1, **dadurch gekennzeichnet, dass** das zweite Aggregat ein ETC-System (49) ist.

10. Portalhubstapler gemäß Anspruch 9, **dadurch gekennzeichnet, dass** das ETC-System (49) eine systemeigene Abgasturbine (50) aufweist.

11. Portalhubstapler gemäß einem der vorstehenden Ansprüche, **gekennzeichnet durch** mindestens einen Energiezwischenspeicher (20), insbesondere in Form von Doppelschichtkondensatoren, Batterien oder Schwungradspeicher, zum Kompensieren von Energiespitzen.

12. Portalhubstapler gemäß Anspruch 11, **gekennzeichnet durch** einen Lade-/Entladeregler (19) für jeweils einen Energiezwischenspeicher (20).

13. Portalhubstapler gemäß einem der vorstehenden Ansprüche, **dadurch gekennzeichnet, dass** das zweite Aggregat (9; 49) einen Einspeise-Wechselrichter (28) aufweist, der über einen Feldbus (14) mit einer elektronischen Fahrzeugsteuerung (15) in Kommunikationsverbindung steht.

14. Portalhubstapler gemäß Anspruch 13, **dadurch gekennzeichnet, dass** mit dem Feldbus (14) mindestens ein Fahrantrieb (16), mindestens ein Hubantrieb (17) und mindestens ein Hilfsantrieb (18) in Kommunikationsverbindung stehen.

15. Portalhubstapler gemäß Anspruch 13 öder 14, **dadurch gekennzeichnet, dass** die Fahrzeugsteuerung (15) ein Steuern der Energieflüsse ermöglicht.

## Claims

1. Portal forklift truck comprising
a. a first unit (10) for producing primary electrical energy **characterised in that** it also comprises
b. a second unit (9; 49) for producing secondary electrical energy by converting into electricity the waste heat from the first unit (10) which is created when producing the primary electrical energy.

2. Portal forklift truck according to claim 1, **characterised in that** the second unit is an ORC unit (9).

3. Portal forklift truck according to claim 2, **characterised by** a heat exchanger (22) for outputting the waste heat from the first unit (10) into the ORC unit (9).

4. Portal forklift truck according to claim 3, **characterised by** a lubricant trap (27) arranged between the heat exchanger (22) and the ORC unit (9).

5. Portal forklift truck according to claim 3 or 4, **characterised by** a feed pump (26) for conveying operating medium condensed in a condenser (25) from the ORC unit (9) to the heat exchanger (22).

6. Portal forklift truck according to claim 5, **characterised in that** liquid natural gas is used as the coolant in the condenser (25).

7. Portal forklift truck according to claim 5 or 6, **characterised in that** the second unit (9) is designed as a closed gas turbine processing system and helium or nitrogen is used in particular as the working fluid.

8. Portal forklift truck according to claim 6 or 7, **characterised by** an LNG tank (58), which is connected via a feed line (60) to the condenser (25) or an additional heat exchanger (25), wherein in particular the combustion engine in the form of a gas engine (57) is connected via a gas line (59, 61) and in particular a gas mixer (62) to the condenser (25) or the additional heat exchanger (25).

9. Portal forklift truck according to claim 1, **characterised in that** the second unit is an ETC system (49).

10. Portal forklift truck according to claim 9, **characterised in that** the ETC system (49) comprises its own exhaust gas turbine (50).

11. Portal forklift truck according to any one of the preceding claims, **characterised by** at least one temporary energy storage device (20), in particular in the form of dual-layer capacitors, batteries or flywheel generators, for compensating energy spikes.

12. Portal forklift truck according to claim 11, **characterised by** a charging/discharging control device (19) for each temporary energy storage device (20).

13. Portal forklift truck according to any one of the preceding claims, **characterised in that** the second unit (9; 49) comprises a feed inverter (28) which communicates with an electronic vehicle control unit (15) via a field bus (14).

14. Portal forklift truck according to claim 13, **characterised in that** at least one drive (16), at least one lift drive (17) and at least one auxiliary drive (18) communicate with the field bus (14).

15. Portal forklift truck according to claim 13 or 14, **characterised in that** energy flows can be controlled by the vehicle control unit (15).

## Revendications

1. Chariot cavalier comprenant
a. un premier groupe (10) pour la génération d'énergie électrique primaire
**caractérisé en ce qu**'il comprend également
b. un deuxième groupe (9 ; 49) pour la génération d'énergie électrique secondaire par récupération d'énergie à partir des pertes thermiques provenant de la génération d'énergie électrique primaire du premier groupe (10).

2. Chariot cavalier selon la revendication 1, **caractérisé en ce que** le deuxième groupe est un groupe (9) à cycle de Rankine organique (CRO).

3. Chariot cavalier selon la revendication 2, **caractérisé par** un échangeur de chaleur (22) pour le couplage des pertes thermiques du premier groupe (10) avec le groupe à CRO (9).

4. Chariot cavalier selon la revendication 3, **caractérisé par** un séparateur de produit de lubrification (27) disposé entre l'échangeur de chaleur (22) et le groupe à CRO (9).

5. Chariot cavalier selon les revendications 3 ou 4, **caractérisé par** une pompe d'alimentation (26) pour le transfert d'un fluide de travail condensé dans un condensateur (25) à partir du groupe à CRO (9) vers l'échangeur de chaleur (22).

6. Chariot cavalier selon la revendication 5, **caractérisé en ce que** du gaz naturel liquide est employé en tant que moyen de refroidissement dans le condensateur (25).

7. Chariot cavalier selon les revendications 5 ou 6, **caractérisé en ce que** le deuxième groupe (9) est conçu sous la forme d'un système à processus de turbine à gaz fermé et qu'en particulier, de l'hélium ou de l'azote sont employés en tant que fluides de travail.

8. Chariot cavalier selon les revendications 6 ou 7, **caractérisé par** un réservoir de gaz naturel liquéfié (GNL) (58) qui est relié avec le condensateur (25) ou un autre échangeur de chaleur (25) par une conduite d'alimentation (60), dans lequel le moteur thermique conçu notamment sous la forme d'un moteur à gaz (57) est relié avec le condensateur (25), respectivement, l'autre échangeur de chaleur (25), par une conduite de gaz (59, 61) et notamment, un mélangeur de gaz (62).

9. Chariot cavalier selon la revendication 1, **caractérisé en ce que** le deuxième groupe est un système de commande électronique du papillon des gaz (ETCS) (49).

10. Chariot cavalier selon la revendication 9, **caractérisé en ce que** le système de commande électronique du papillon des gaz ETC (49) présente une turbine à gaz d'échappement (50) propre au système.

11. Chariot cavalier selon l'une des revendications précédentes, **caractérisé par** au moins un accumulateur intermédiaire d'énergie (20), notamment sous la forme de condensateurs à double couche, de batteries ou de stockages à volant d'inertie, pour la compensation de pics d'énergie.

12. Chariot cavalier selon la revendication 11, **caractérisé par** un régulateur charge/décharge (19) pour chaque accumulateur intermédiaire d'énergie (20).

13. Chariot cavalier selon l'une des revendications précédentes, **caractérisé en ce que** le deuxième groupe (9 ; 49) présente un onduleur pour l'alimentation (28) qui est en liaison de communication avec une commande électronique de véhicule (15) par un bus de terrain (14).

14. Chariot cavalier selon la revendication 13, **caractérisé en ce qu**'au moins un entraînement moteur (16), au moins un entraînement de levage (17) et au moins un entraînement auxiliaire (18), sont en liaison de communication avec le bus de terrain (14).

15. Chariot cavalier selon les revendications 13 ou 14, **caractérisé en ce que** la commande du véhicule (15) permet une commande des flux d'énergie.
